# EUROPÄISCHE PATENTSCHRIFT

(11) **EP 3 004 194 B1**
(45) Veröffentlichungstag und Bekanntmachung des Hinweises auf die Patenterteilung: **22.02.2017**
(21) Anmeldenummer: 14728164.6
(22) Anmeldetag: 02.06.2014
(51) Int. Cl.: C08G 18/66, C08K 3/22, C08G 18/08, C09D 175/08, C08G 18/48, C08G 18/76, C08G 18/34, C08G 18/10, C08G 18/32, C08K 3/26, C08K 3/34, C08G 18/42, C08G 18/40

(54) **FÜLLSTOFFHALTIGE POLYOLFORMULIERUNGEN UND DARAUS HERGESTELLTE POLYURETHANE**
POLYOL FORMULATIONS CONTAINING FILLER AND POLYURETHANES MADE OF THE SAME
FORMULES DE POLYOLS CONTENANT UN PRODUIT DE REMPLISSAGE ET POLYURÉTHANES FABRIQUÉS À PARTIR DE CELLES-CI

(30) Priorität: 07.06.2013 EP 13171107
(43) Veröffentlichungstag der Anmeldung: 13.04.2016
(73) Patentinhaber: Covestro Deutschland AG, 51373 Leverkusen (DE)
(72) Erfinder: BRENNECKE, Wolfgang, 51429 Bergisch Gladbach (DE); KÜRSCHNER, Joachim, 51379 Leverkusen (DE); PLEISS, Klaus, 51469 Bergisch Gladbach (DE); SCHMIDT, Heike, 51377 Leverkusen (DE); KOEKTAS, Yusuf, 51143 Köln (DE); ROTHE, Bernd, 50668 Köln (DE)
(74) Vertreter: Levpat
(86) Internationale Anmeldenummer: PCT/EP2014/061326
(87) Internationale Veröffentlichungsnummer: WO 2014/195251

(56) Entgegenhaltungen:
- EP-A1- 0 947 528
- WO-A1-2004/065469
- US-A1- 2009 098 302

## Beschreibung

Die vorliegende Erfindung betrifft füllstoffhaltige Polyolformulierungen, damit hergestellte Polyurethane und Bauteile, die diese füllstoffhaltigen Polyurethane aufweisen, sowie ein Verfahren zur Herstellung der Bauteile, insbesondere durch Sprühtechnik.

Die Verwendung von Füllstoffen ermöglicht es, die mechanischen Eigenschaften von damit hergestellten Polyurethanen genau einzustellen. Zur Erreichung eines hohen E-Modules von mehr als 6000 MPa wird hierbei ein hoher Füllstoffanteil benötigt. Die Verarbeitung von hochgefüllten Systemen in der Polyurethansprühtechnik bedarf dabei einer aufwendigen Anpassung der Verarbeitungsanlagen und der Ausgangskomponenten, um eine kontinuierliche und reproduzierbare Verarbeitung in der Produktion zu gewährleisten.

In EP-A 0728 574 wird als Füllstoff Glimmer verwendet. In dieser Patentanmeldung wird ein Anteil von 10 bis 55 Gew.-% an Glimmer, bezogen auf die Polyurethanmischung verwendet. Nachteil beim Einsatz von Glimmer ist, dass ein hoher Elastizitätsmodul (E-Modul) von beispielsweise >6000 MPa nicht erreicht werden kann. Des Weiteren hat Glimmer eine hohe Dichte von mehr als 2800 kg/m³. Somit sind keine Bauteile mit hohem Füllgrad und gleichzeitig geringem spezifischem Gewicht herstellbar.

In US-A 7842349 wird ein Polyurethansystem beschrieben, bei welchem die Füllstoffe sowohl auf der Polyol- als auch auf der Isocyanatkomponente eingesetzt werden. Durch die Verwendung in beiden Komponenten ist ein hoher Füllstoffgehalt von mehr als 40 Gew.-%, bezogen auf das gesamte Polyurethansystem, möglich. Die Vorbereitung der Füllstoffe und die Einarbeitung der Füllstoffe insbesondere in die Isocyanatkomponente ist allerdings sehr aufwendig. Der alleinige Einsatz der Füllstoffe in der Polyolkomponente in entsprechend höheren Mengen ist nicht beschrieben.

In WO 2004/065469 wird für Gießsysteme auf Basis von Epoxiden die Kombination unterschiedlicher Füllstoffe zur Erreichung von homogenen Viskositäten im Polyurethan beschrieben. Die beschriebenen Gießsysteme werden hierbei vergossen, so dass Viskositäten im Gesamtsystem von mehr als 5000 mPas ohne Probleme verarbeitbar. Solche Viskositäten sind in einem Polyurethansprühprozess allerdings nicht versprühbar, da die Förderung in den Anlagen bei so hohen Viskositäten nicht möglich und auch die Erzeugung eines homogenen Sprühbildes nicht realisierbar ist. Desweiteren werden in diesem Dokument Füllstoffe, wie z.B. Quarzmehl beschrieben, welche im Sprühprozess bei Drücken von teilweise 160 bar zu einer schnellen Zerstörung der Anlagen führen würden. In WO 2004/065469 werden Füllstoffe eingesetzt, deren Feinfraktion einen mittleren Partikeldurchmesser (d₅₀) von 2,53 µm aufweist.

Aufgabe der vorliegenden Erfindung war es daher, eine Polyolformulierung mit einem hohen Anteil an Füllstoff zur Verfügung zu stellen, mit der entsprechend hochgefüllte Polyurethane hergestellt werden können und bei der kein Sedimentieren auftritt. Außerdem soll es möglich sein, die füllstoffhaltige Polyolformulierung in Abmischung mit einem oder mehreren Di- und/oder Polyisocyanaten in der Sprühtechnik ohne Probleme einzusetzen.

Überraschenderweise wurde gefunden, dass diese Aufgabe durch die Kombination von groben und feinen Füllstoffen gelöst werden konnte.

Gegenstand der Erfindung ist eine füllstoffhaltige Polyolformulierung bestehend aus
i) einer Polyolkomponente mit einer zahlenmittleren OH-Zahl von 250 bis 600 mg KOH/g und einer zahlenmittleren Funktionalität von 2,5 bis 5, die mindestens ein oder mehrere Polyole enthält
ii) gegebenenfalls Kettenverlängerern und/oder Vernetzungsmitteln
iii) gegebenenfalls Katalysatoren und/oder Aktivatoren
iv) gegebenenfalls Hilfs- und/oder Zusatzmitteln
v) gegebenenfalls Treibmitteln
vi) mindestens einem Füllstoff aus der Gruppe bestehend aus Calciumcarbonat, Kaolinit, Aluminiumhydroxid und Talkum in einer Menge von 50 bis 75 Gew.-%, bezogen auf die Polyolformulierung,
wobei ein Grobanteil an Füllstoffteilchen mit d₅₀ von 30 bis 80 µm in einer Menge von 80 bis 97,5 Gew.-%, bezogen auf den Füllstoff, und ein Feinanteil an Füllstoffteilchen mit d₅₀ von 0,5 bis 2 µm in einer Menge von 2,5 bis 20 Gew.-%, bezogen auf den Füllstoff, vorliegt und der Füllstoff bis zu 40 Tagen bei 20°C nicht sedimentiert und wobei die Viskosität der Polyolformulierung bei 70°C unter 5000 mPas (gemäß DIN EN ISO 2555 bei 70°C) liegt.

Ein weiterer Gegenstand der Erfindung ist ein füllstoffhaltiges Polyurethan enthaltend das Reaktionsgemisch aus
a) einer füllstoffhaltigen Polyolformulierung bestehend aus
   i) einer Polyolkomponente mit einer zahlenmittleren OH-Zahl von 250 bis 600 mg KOH/g und einer zahlenmittleren Funktionalität von 2,5 bis 5, die mindestens ein oder mehrere Polyole enthält
   ii) gegebenenfalls Kettenverlängerern und/oder Vernetzungsmitteln
   iii) gegebenenfalls Katalysatoren und/oder Aktivatoren
   iv) gegebenenfalls Hilfs- und/oder Zusatzmitteln
   v) gegebenenfalls Treibmitteln
   vi) mindestens einem Füllstoff aus der Gruppe bestehend aus Calciumcarbonat, Kaolinit, Aluminiumhydroxid und Talkum in einer Menge von 50 bis 75 Gew.-%, bezogen auf die Polyolformulierung,
   wobei ein Grobanteil an Teilchen mit d₅₀ von 30 bis 80 µm in einer Menge von 80 bis 97,5 Gew.-%, bezogen auf den Füllstoff, und ein Feinanteil an Teilchen mit d₅₀ von 0,5 bis 2 µm in einer Menge von 2,5 bis 20 Gew.-%, bezogen auf den Füllstoff, vorliegt und der Füllstoff bis zu 40 Tagen bei 20°C nicht sedimentiert und wobei die Viskosität der Polyolformulierung bei 70°C unter 5000 mPas (gemäß DIN EN ISO 2555 bei 70°C) liegt, und
b) mindestens einer Di- und/oder Polyisocyanatkomponente.

Ein weiterer Gegenstand der Erfindung sind Bauteile, die aus mindestens einem erfindungsgemäßen füllstoffhaltigen Polyurethan und gegebenenfalls einem Substrat oder einer oder mehreren Schichten bestehen.

Ein weiterer Gegenstand der Erfindung sind Bauteile, die aus mindestens einem erfindungsgemäßen füllstoffhaltigen Polyurethan und einem Substrat oder einer oder mehreren Schichten bestehen.

Ein weiterer Gegenstand der Erfindung sind Verbundbauteile, die aus mindestens einer Schicht aus einem erfindungsgemäßen füllstoffhaltigen Polyurethan und mindestens einer weiteren Schicht bestehen.

Ein weiterer Gegenstand der Erfindung ist ein Verfahren zur Herstellung der erfindungsgemäßen Verbundbauteile, die mindestens eine füllstoffhaltige Polyurethanschicht aus einer füllstoffhaltigen Polyolformulierung und mindestens einer Di- und/oder Polyisocyanatkomponente und mindestens ein Substrat oder eine weitere Schicht aufweisen, durch Sprühtechnik, dadurch gekennzeichnet, dass
a) mindestens ein Füllstoff aus der Gruppe bestehend aus Calciumcarbonat, Kaolinit, Talkum und Aluminiumhydroxid in einer Menge von 50 bis 75 Gew.-%, bezogen auf die füllstoffhaltige Polyolformulierung, mit einer Polyolformulierung bestehend aus
   i) einer Polyolkomponente mit einer zahlenmittleren OH-Zahl von 250 mg KOH/g bis 600 mg KOH/g und einer mittleren Funktionalität von 2,5 bis 5, die ein oder mehrere Polyole enthält
   ii) gegebenenfalls Kettenverlängerern und/oder Vernetzungsmitteln
   iii) gegebenenfalls Katalysatoren und/oder Aktivatoren
   iv) gegebenenfalls Hilfs- und/oder Zusatzmitteln
   v) gegebenenfalls Treibmitteln
   zu einer füllstoffhaltigen Polyolformulierung mit einer Viskosität bei 70°C von unter 5000 mPas (gemäß DIN EN ISO 2555 bei 70°C) abgemischt wird, wobei ein Grobanteil an Füllstoffteilchen mit d₅₀ von 30 bis 80 µm in einer Menge von 80 bis 97,5 Gew.-%, bezogen auf den Füllstoff, und ein Feinanteil an Füllstoffteilchen mit d₅₀ von 0,5 bis 2 µm in einer Menge von 2,5 bis 20 Gew.-%, bezogen auf den Füllstoff, vorliegt und der Füllstoff bis zu 40 Tagen bei 20°C nicht sedimentiert,
b) die füllstoffhaltige Polyolformulierung aus a) in einem Sprühkopf mit mindestens einer Di- und/oder Polyisocyanatkomponente zu einer Mischung vermischt wird,
c) die Mischung aus b) auf ein Substrat oder eine Schicht aufgesprüht wird und aushärtet.

Die erfindungsgemäß eingesetzten Füllstoffe sind Calciumcarbonat, Kaolinit, Aluminiumhydroxid und Talkum. Diese Füllstoffe verhalten sich gegenüber der Polyurethanreaktion neutral. Die Mohssche Härte der Füllstoffe liegt unter einem Wert von 3, so dass die Polyurethanreaktivmischung mit diesen Füllstoffen prinzipiell in Sprühanlagen verarbeitet werden kann. Bei Mohsschen Härten oberhalb von 3 ist der Anlagenverschleiß zu groß und der Sprühprozess wäre somit technisch nicht sinnvoll. Wichtig für die Verarbeitbarkeit ist weiterhin die Viskosität der Polyolformulierung, welche bei 70°C unterhalb von 5000 mPas (gemäß DIN EN ISO 2555 bei 70°C) liegen sollte, bevorzugt zwischen 2000 und 5000 mPas, besonders bevorzugt zwischen 2500 und 5000 mPas.

Die verwendeten Füllstoffe gehören zur Gruppe der Calciumcarbonate (chemische Bezeichnung CaCO₃), Kaolinit (chemische Bezeichnung Al₄[(OH)₈]Si₄O₁₀), Aluminiumhydroxide (chemische Bezeichnung Al(OH)₃) und Talkum (chemische Bezeichnung Mg₃[Si₄O₁₀(OH)₂]). Die eingesetzten Füllstoffe in der Polyolformulierung weisen einen Grobanteil und einen Feinanteil an Partikeln auf, wobei der Fein- und Grobanteil in einem Füllstoff oder der Feinanteil in einem Füllstoff und der Grobanteil in einem anderen Füllstoff vorliegen kann. Der mittlere Partikeldurchmesser d₅₀ ist jeweils über die Normen DIN ISO 9276-1 und -2 als gewogener mittlerer Partikeldurchmesser definiert.

Die Dichte der eingesetzten Füllstoffe liegt unter 2800 kg/m³.

Bei den erfindungsgemäß verwendeten Di- und/oder Polyisocyanaten handelt es sich vorzugsweise um aliphatische, cycloaliphatische oder aromatische Di- und/oder Polyisocyanate. Bevorzugt handelt es sich um bei Raumtemperatur flüssige Di- und/oder Polyisocyanate der Diphenylmethanreihe. Hierzu gehören bei Raumtemperatur flüssige und gegebenenfalls entsprechend modifizierte Gemische von 4,4'-Diisocyanato¬diphenyl¬methan mit 2,4'- und gegebenenfalls 2,2'-Diisocyanatodiphenylmethan. Gut geeignet sind auch bei Raumtemperatur flüssige Polyisocyanatgemische der Diphenyl¬methan¬reihe, die neben den genannten Isomeren deren höhere Homologe enthalten und die in an sich bekannter Weise durch Phosgenierung von Anilin/Formaldehyd-Konden¬saten zugänglich sind. Auch Urethan- und/oder Carbodiimidgruppen aufweisende Modifizierungsprodukte dieser Di-und Polyisocyanate sind geeignet. Auch Allo¬phanat- bzw. Biuretgruppen aufweisende Modifi¬zie¬rungs¬produkte der genannten Di- und Polyiso¬cyanate sind geeignet. Die Polyisocyanatkomponente weist vorzugsweise eine mittlere NCO-Funktio¬nalität von 2,1 bis 5,0, besonders bevorzugt 2,5 bis 3,1 auf.

Bevorzugt wird als Isocyanat-Komponente ein Semiprepolymer auf Basis von Diphenylmethandiisocyanat (MDI) mit 20 bis 30 Gew.-% NCO-Gruppen eingesetzt.

Die Polyolkomponente erfüllt neben ihrer Funktion als Aufbaukomponente für die Polyurethan¬matrix zusätzlich noch die Rolle eines Dispersionsmittels. Bei den zu verwendenden Polyolen kann es sich vorzugsweise um in der Polyurethanchemie an sich bekannte, bei 10 bis 60°C flüssige Polyhydroxypolyether, -polyester, -polythioether, -polyacetale, -polycarbonate, polyesteramide, - polyamide oder -polybutadiene handeln. Auch bereits Urethan- oder Harnstoff¬gruppen ent¬haltende Polyhydroxylverbindungen sowie gegebenenfalls modifizierte natürliche Polyole, wie Rizinusöl, können als Polyolkomponente eingesetzt werden. Selbstverständlich können auch Mischungen der obengenannten Verbindungen, z.B. Mischungen von Polyhydroxypolyethern und -polyestern, eingesetzt werden.

Bei den eingesetzten Polyolen handelt es sich bevorzugt um Polyhydroxypolyether, welche auf an sich bekannte Weise durch Polyaddition von Alkylenoxiden an polyfunktionelle Starter-verbindungen in Gegen¬wart von Katalysatoren hergestellt werden können. Bevorzugt werden die erfindungs¬gemäß eingesetzten Poly¬(oxy¬alkylen)¬polyole aus einer Starterverbindung mit durch¬schnittlich 3 bis 8 aktiven Wasserstoffatomen und einem oder mehreren Alkylenoxiden hergestellt. Bevorzugte Starterverbindungen sind Moleküle mit drei bis acht Hydroxylgruppen pro Molekül wie Triethanolamin, Glycerin, Trimethylolpropan, Pentaerythrit, Sorbit und Saccharose. Die Starter¬ver¬bin¬dungen können allein oder im Gemisch, u.a. mit difunktionellen Starterver¬bindungen wie Di¬ethy¬len¬glykol, Dipropylenglykol, Triethylenglykol, Tripropylenglykol, 1,4-Butandiol, 1,6-Hexan¬diol verwendet werden. Die erfindungsgemäß eingesetzten Polyole werden aus einem oder mehreren Alkylenoxiden hergestellt. Bevor¬zugt verwendete Alkylenoxide sind Oxiran, Methyloxiran und Ethyloxiran. Diese können allein oder im Gemisch verwendet werden. Bei Verwendung im Gemisch ist es möglich, die Alkylenoxide statistisch oder blockweise oder beides nacheinander umzusetzen. Ebenfalls geeignet sind solche höhermolekularen Polyhydroxy¬polyether, in denen hochmolekulare Polyaddukte bzw. Polykondensate oder Polymerisate in fein¬disperser, gelöster oder aufgepropfter Form vorliegen. Derartige modifizierte Poly¬hydroxyl¬verbindungen werden z.B. erhalten, wenn man Polyadditionsreaktionen (z.B. Umsetzungen zwischen Polyisocyanaten und aminofunktionellen Verbin¬dungen) bzw. Polykondensations¬reaktionen (z.B. zwischen Formaldehyd und Phenolen und/oder Aminen) in situ in den Hydroxylgruppen aufweisenden Verbin¬dungen ablaufen lässt (wie beispielsweise in DE-AS 1 168 075 beschrieben). Auch durch Vinylpolymerisate modifizierte Polyhydroxylverbindungen, wie sie z.B. durch Polymerisation von Styrol und Acrylnitril in Gegenwart von Polyethern (z.B. gemäß US-PS 3 383 351) erhalten werden, sind für das erfindungsgemäße Verfahren als Polyolkom¬ponente geeignet. Vertreter der genannten erfindungsgemäß als Ausgangs¬komponente zu verwen¬den¬den Verbindungen sind z.B. im Kunststoff-Handbuch, Band VII "Polyurethane", 3. Auflage ", Carl Hanser Verlag, München / Wien, 1993, Seiten 57 - 67 bzw. Seiten 88 - 90 beschrieben.

Bevorzugt werden als Polyolkomponente eine Mischung aus einem oder mehreren Polyetherpolyolen eingesetzt, welche eine zahlenmittlere Hydroxylzahl (OH-Zahl) von 250 bis 600 mg KOH/g und eine zahlenmittlere Funktionalität von 2,5 bis 5, vorzugsweise von 2,5 bis 4, aufweist.

Die an sich langsam ablaufende Bildungsreaktion des Polyurethans kann gegebenenfalls durch Zusatz von Katalysatoren beschleunigt werden. Dabei können an sich bekannte, die Reaktion zwischen Hydroxyl- und Isocyanatgruppen beschleunigenden Katalysatoren verwendet werden. Insbeson-dere kommen tertiäre Amine der an sich bekannten Art in Frage, z.B. Triethylamin, Tributy-lamin, N-Methylmorpholin, N-Ethylmorpholin, N-Cocomorpholin, N,N,N',N'-Tetra¬methyl-ethylendiamin, 1,4-Diazabicyclo[2.2.2]octan, N-Methyl-N'-dimethyl¬amino¬ethyl¬piperazin, N,N-Dimethylcyclo¬hexyl¬¬amin, N,N,N',N'-Tetramethyl-1,3-butan¬di¬amin, N,N-Dimethylimidazol-ß-phenylethylamin, 1,2-Di¬methyl¬imidazol oder 2 Methylimidazol. Auch organische Metallkatalysatoren, insbesondere organische Wismutkatalysatoren, wie z.B. Wismut-(III)-neodecanoat oder organische Zinnkata¬lysatoren, wie z.B. Zinn-(II)-salze von Carbonsäure wie Zinn-(II)-acetat, Zinn-(II)-octoat, Zinn-(II)-ethylhexoat und Zinn-(II)-laurat und die Dialkylzinnsalze von Carbonsäuren, wie z.B. Dibutyl¬zinndiacetat, Dibutylzinndilaurat, Dibutylzinn¬maleat oder Dioctylzinndiacetat können allein oder in Kombination mit den tertiären Aminen verwendet werden. Vorzugsweise werden 0 bis 5 Gew. %, insbesondere 0,3 bis 2,0 Gew.-%, Katalysator bzw. Katalysatorkombination, bezogen auf die Polyolformulierung eingesetzt. Weitere Vertreter von Katalysatoren sowie Einzelheiten über die Wirkungs¬weise der Katalysatoren sind im Kunststoff-Handbuch, Band VII "Polyurethane", 3. Auflage ", Carl Hanser Verlag, München / Wien, 1993 auf den Seiten 104 - 110 beschrieben.

Zu den Hilfs- und Zusatzstoffen, die gegebenenfalls mitverwendet werden können, gehören beispielsweise färbende Agenzien, wasserbindende Substanzen, Flammschutzmittel, Weichmacher und/oder einwertige Alkohole.

Als färbende Agenzien können die erfindungsgemäßen Polyolformulierungen z.B. für die Einfärbung von Polyurethanen an sich bekannte Farbstoffe und/oder Farbpigmente auf organischer und/oder anorganischer Basis enthalten, beispielsweise Titandioxid-, Eisenoxid- und/oder Chromoxidpigmente und Pigmente auf Phthalocyanin- und/oder Monoazo-Basis.

Als wasserbindende Substanzen geeignet sind sowohl gegenüber Wasser hoch¬reaktive Verbindungen, wie z.B. Tris(chlorethyl)orthoformat, wie auch wasser¬bindende Füllstoffe, z.B. Erdalkalioxide, Zeolithe, Aluminiumoxide und Silikate. Geeignete synthetische Zeolithe sind z.B. unter der Bezeichnung Baylith® im Handel.

Geeignete, gegebenenfalls mitzuverwendende Flammschutzmittel sind beispiels¬weise Trikresylphophat, Tris-2-chlorethylphosphat, Tris-chlorpropylphosphat und Tris-2,3-dibrompropylphosphat. Außer den bereits genannten halogensubstituierten Phosphaten können auch anorganische Flammschutzmittel, wie Aluminium¬oxid¬hydrat, Ammoniumpolyphosphat, Calciumsulfat, Natrium¬polymetaphosphat oder Aminphosphate, z.B. Melaminphosphate verwendet werden.

Als Weichmacher seien beispielsweise Ester von mehrwertigen, vorzugsweise zweiwertigen Carbonsäuren mit einwertigen Alkoholen genannt. Die Säurekomponente solcher Ester kann sich z.B. herleiten von Bernsteinsäure, Isopthalsäure, Trimellitsäure, Phthalsäureanhydrid, Tetra- und/oder Hexahydrophthalsäureanhydrid, Endomethylentetrahydrophthalsäureanhydrid, Glutarsäure¬an¬hydrid, Maleinsäureanhydrid, Fumarsäure und/oder dimeren und/oder trimeren Fettsäuren, gegebenenfalls in Mischung mit monomeren Fettsäuren. Die Alkoholkomponente solcher Ester kann sich z.B. herleiten von verzweigten und/oder unverzweigten aliphatischen Alkoholen mit 1 bis 20 C-Atomen, wie Methanol, Ethanol, Propanol, Isopropanol, n- Butanol, sek.-Butanol, tert.-Butanol, den verschiedenen Isomeren des Pentylalkohols, Hexylalkohols, Octylalkohols (z.B. 2 Ethyl-Hexanol), Nonylalkohols, Decylalkohols, Laurylalkohols, Myristylalkohols, Cetyl¬alko¬hols, Stearylalkohols und/oder von natürlich vorkommenden oder durch Hydrierung natürlich vorkommender Carbonsäuren erhältlichen Fett- und Wachsalkoholen. Als Alkoholkomponente kommen auch cycloaliphatische und/oder aromatische Hydroxyverbindungen infrage, beispiels¬weise Cyclohexanol und dessen Homologe, Phenol, Kresol, Thymol, Carvacrol, Benzylalkohol und/oder Phenylethanol. Als Weichmacher kommen außerdem Ester der obengenannten Alkohole mit Phosphorsäure in Frage. Gegebenenfalls können auch Phosphorsäureester aus halogenierten Alkoholen, wie z.B. Trichlorethylphosphat, eingesetzt werden. Im letzteren Fall kann gleichzeitig mit dem Weichmacher-Effekt ein flammhemmender Effekt erzielt werden. Selbstverständlich können auch gemischte Ester der obengenannten Alkohole und Carbonsäuren eingesetzt werden. Bei den Weichmachern kann es sich auch um sogenannte polymere Weichmacher handeln, z.B. um Polyester der Adipin-, Sebacin-und/oder Phthalsäure. Weiter sind auch Alkylsulfonsäureester des Phenols, z.B. Paraffinsulfonsäurephenylester, als Weichmacher verwendbar.

Weitere, gegebenenfalls mitzuverwendende Zusatzstoffe sind einwertige Alko¬hole wie Butanol, 2-Ethylhexanol, Octanol, Dodecanol oder Cyclohexanol, die gege¬benenfalls zwecks Herbeiführung eines gewünschten Kettenabbruchs mit verwendet werden können.

Die Erzeugung der erfindungsgemäßen Bauteile erfolgt durch schichtweisen Auftrag auf ein Substrat, vorzugsweise durch Sprühen. Dabei werden die Komponenten der Polyurethanreaktivmischung, insbesondere Isocyanat, füllstoffhaltiges Polyolgemisch, gegebenenfalls getrennt das Treibmittel, mittels getrennter Leitungen einem geeigneten Mischaggregat dosiert zugeführt, wobei der Auslaß des Mischaggregates als Sprühkopf ausgebildet ist. Als Mischaggregat sind sowohl nach der Gegenstrom-Injektionsmethode arbeitende Hochdruckmischaggregate als auch Niederdruck-Rührwerksmischaggregate geeignet.

Jede der Massiv- oder Schaumschichten kann dabei vorteilhaft durch Aufsprühen der Reaktivmischung in mehreren Lagen erzeugt werden, so dass, insbesondere wenn dickere Schichten erforderlich sind, ein Ablaufen der jeweils noch flüssigen, noch nicht ausreagierten Lage von gegen die Horizontale geneigten Auftragsflächen vermieden wird. Dabei erfolgt der Auftrag der aufeinanderfolgenden Lagen jeweils "naß in naß", d.h. in einem noch nicht vollständig ausreagierten Zustand der vorher aufgetragenen Lage, insbesondere vor Eintritt der Klebfreiheit der jeweils vorigen Lage. Auch der Auftrag der ersten Lage der erfindungsgemäßen Polyurethanschicht auf eine letzte Lage einer darunter liegenden Schicht erfolgt vorzugsweise "naß in naß", d.h. bevor Klebfreiheit der Schicht eingetreten ist.

Die erfindungsgemäßen Polyurethane werden insbesondere zur Herstellung von Verbundbauteilen verwendet. Die Polyurethane zeichnen sich durch eine hohe Festigkeit aus und können somit als Verstärkungslagen oder als Reinmaterial mit hoher Festigkeit verwendet werden.

Die Erfindung soll anhand der nachfolgenden Beispiele näher erläutert werden.

### Beispiele

### Ausgangsverbindungen:

Polyolkomponente (zahlenmittlere OH-Zahl 299 mg KOH/g, Funktionalität 3) aus
41,2 Gew.-% eines Polyetherpolyols auf Basis Ethylen- und Propylenoxid mit einer OH-Zahl von 440 (Molekulargewicht (MG): 360g/mol), einer Funktionalität von 2,8, einem Propylenoxidgehalt von 71 Gew.-%, Starter: Zucker
17,4 Gew.-% eines Polyetherpolyols auf Basis Ethylen- und Propylenoxid mit einer OH-Zahl von 470 (MG: 480g/mol), einer Funktionalität von 4, einem Propylenoxidgehalt von 87 Gew.-%, Starter: Ethylendiamin
13,4 Gew.-% eines Polyetherpolyols auf Basis Ethylen- und Propylenoxid mit einer OH-Zahl von 175 (MG: 1900g/mol), einer Funktionalität von 6, einem Ethylenoxidgehalt von 18 Gew.-%, Starter: Sorbit
12,6 Gew.-% eines Polyetherpolyols auf Basis Ethylen- und Propylenoxid mit einer OH-Zahl von 35 (MG: 4809g/mol), einer Funktionalität von 3, einem Ethylenoxidgehalt von 17,2 Gew.-%, Starter: Glycerin
6,6 Gew.-% Rizinusöl (OH-Zahl von 160, Funktionalität 2,7)
6,6 Gew.-% Zeolith Pulver
0,1 Gew.-% Diazabicyclooctan
0,2 Gew.-% Dipropylenglycol
1,4 Gew.-% Diethylbenzoldiamin
0,4 Gew.-% Cyclohexyldimethylamin

Isocyanatkomponente: NCO-Prepolymer (NCO-Gehalt: 24,78 Gew.-%) aus
92,5 Gew.-% Isocyanat aus
   94,2 Gew.-% Zweikern-Diphenylmethandiisocyanat (MDI)
   5,2 Gew.-% Dreikern-MDI
   0,6 Gew.-% Vierkern-MDI
7,5 Gew.-% eines Polyetherpolyols auf Basis Ethylen- und Propylenoxid mit einer OH-Zahl von 175 und einer zahlenmittleren Funktionalität von 3 und einem Propylenoxidgehalt von 30,5 Gew.-% und als Starter: Trimethylolpropan

Füllstoff 1 (Calciumcarbonat): Mikhart 40 von der Firma Provencale S.A.
Füllstoff 2 (Calciumcarbonat): Mikhart 65 von der Firma Provencale S.A.
Füllstoff 3 (Calciumcarbonat): Calatem C16T der Firma Provencale S.A.
Füllstoff 4 (Kaolinit): Chinafill von der Firma Quarzwerke GmbH
Füllstoff 5 (Aluminiumhydroxid): Martinal ON 320 von der Firma Quarzwerke GmbH

Die Füllstoffe 1 bis 5 weisen eine Dichte von unter 2,7 g/cm³ und eine Mohssche Härte von 3 oder unter 3 auf.

| Typ | Mittlerer Partikeldurchmesser (d₅₀) | Dichte nach ISO 787/10 in g/cm³ | Mohssche Härte |
|---|---|---|---|
| Calatem C16T | 1,6 µm | 2,7 | 3 |
| Chinafill 100 | 2,0 µm | 2,6 | 2 |
| Martinal ON 320 | 20 µm | 2,4 | 2,5 - 3 |
| Mikhart 40 | 30 µm | 2,7 | 3 |
| Mikhart 65 | 60 µm | 2,7 | 3 |

### Versuchsdurchführung:

### Herstellung der Polyolformulierung

Die Füllstoffe wurden in die Polyolkomponente eingerührt und die entstandene Polyolformulierung danach für mindestens 30 Minuten evakuiert, um eine Luftbeladung der Polyolformulierung zu verhindern.

Zur Ermittlung der Viskosität der verschiedenen Polyolformulierungen bei 70°C wurde ein Gerät der Firma Haake mit einem Messbereich von 1 - 60.000 mPas verwendet. Für die Messungen wurde eine Spindel mit Durchmesser von 16 mm und einem Volumen von ca. 7 cm³ verwendet. Die Messungen erfolgten bei konstanter Drehzahl von 150 Umdrehungen pro Minute bei 70°C in Anlehnung an die Norm DIN EN ISO 2555.

Die Bewertung des Absetzverhaltens erfolgte optisch, und die Bestimmung der sedimentierten Füllstoffe erfolgte durch die Messung der Höhe der sedimentierten Füllstoffe.

Die Viskosität wurde an Polyolformulierungen mit jeweils 70 Gew.-% Füllstoff ermittelt. Die Ergebnisse der Viskositätsmessungen bei 20°C sind der Tabelle 1 und bei 70°C der nachfolgenden Tabelle 2 zu entnehmen.

Der Tabelle 1 sind die Ergebnisse mit Mikhart 40 und Calatem C16T zu entnehmen. Die Viskosität wird durch den Ersatz von Grobanteil (Mikhart 40) durch Feinanteil (Calatem C16T) vermindert. Ab einem Verhältnis von 80 zu 20 steigt die Viskosität wieder an.

**Tabelle 1: Viskosität der Polyolformulierungen mit 70 Gew.-% Füllstoffanteil bei 20 °C**

| Mikhart 40 in Gew.-%, bezogen auf den gesamten Füllstoffgehalt | Calatem C16T in Gew.-%, bezogen auf den gesamten Füllstoffgehalt | Viskosität [mPas] |
|---|---|---|
| 100 | 0 | 43600 |
| 95 | 5 | 33200 |
| 90 | 10 | 30000 |
| 85 | 15 | 27200 |
| 80 | 20 | 32400 |
| 75 | 25 | 36500 |

Zur Prüfung der Verarbeitbarkeit der Polyolformulierungen wurde die Viskosität außerdem bei 70 C ermittelt.

**Tabelle 2: Viskosität der Polyolformulierungen mit 70 Gew.-% Füllstoffanteil bei 70°C**

| Mikhart 65 in Gew.-%, bezogen auf den gesamten Füllstoffgehalt | Calatem C16T in Gew.-%, bezogen auf den gesamten Füllstoffgehalt | Viskosität bei 70 C [mPas] |
|---|---|---|
| 100 | 0 | nicht messbar ; fast vollständige Sedimentation des Füllstoffes |
| 95 | 5 | 3200 |
| 90 | 10 | 3500 |
| 85 | 15 | 4000 |
| 80 | 20 | 4800 |
| 75 | 25 | 5700 |

Die Ergebnisse der Viskositätsmessungen bei 70°C in Tabelle 2 zeigen, dass alle ermittelten Viskositäten der erfindungsgemäßen Polyolformulierungen unterhalb des Grenzwertes von 5000 mPas liegen. Die Viskosität mit 100 Gew.-% grobem Füllstoff war nicht messbar, da sich der Füllstoff fast vollständig abgesetzt hatte. Bei 20°C durchläuft die Viskosität ein Minimum, während sie bei 70°C anscheinend kein Minimum aufweist, sondern nur ansteigt.

Neben den Viskositätsmessungen wurde nach einer Lagerdauer von 24 Stunden bei 50°C und nach einer Dauer von 40 Tagen bei 20°C der sedimentierte Füllstoff vermessen. Die Polyolformulierung wurde hierfür in Glasgefäßen gelagert und nach der jeweiligen Lagerung wurden die Gefäße entleert. Die Auswertung erfolgte durch Abmessung der Sedimenthöhe in Millimetern.

**Tabelle 3: Ermittlung des sedimentierten Füllstoffes nach 24 Stunden Lagerung bei 50°C mit Calatem C16T als Feinanteil, Mikhart-Typen als Grobanteil und insgesamt 70 Gew.-% Füllstoff**

| Grobanteil in Gew.-%, bezogen auf den gesamten Füllstoffanteil | Feinanteil in Gew.-%, bezogen auf den gesamten Füllstoffanteil | Höhe des Sedimentes in Millimetern nach 24 Stunden Lagerung bei 70°C für | | |
|---|---|---|---|---|
| | | Mikhart 65 | Mikhart 40 | Martinal ON 320 |
| 100 | 0 | 40 | 45 | 49 |
| 95 | 5 | 0 | 0 | 0 |
| 90 | 10 | 0 | 0 | 0 |
| 85 | 15 | 0 | 0 | 0 |
| 80 | 20 | 0 | 0 | 0 |

**Tabelle 4: Höhe des sedimentierten Füllstoffes nach 40 Tagen Lagerung bei 20°C mit Calatem C16T als Feinanteil, Martinal ON 320 als Grobanteil und insgesamt 70 Gew.-% Füllstoff**

| Grobanteil in Gew.-%, bezogen auf den gesamten Füllstoffanteil | Feinanteil in Gew.-%, bezogen auf den gesamten Füllstoffanteil | Höhe des Sedimentes in Millimetern nach 40 Tagen Lagerung bei 20°C für |
|---|---|---|
| | | Martinal ON 320 |
| 100 | 0 | 50 |
| 95 | 5 | 0 |
| 90 | 10 | 0 |
| 85 | 15 | 0 |
| 80 | 20 | 0 |

Die Ergebnisse aus Tabelle 3 und 4 bestätigen den Effekt des feinen Füllstoffes zur Verhinderung der Sedimentation.

Die Versuche bestätigen die Wirkung der Feinfraktion in den hochgefüllten Polyolformulierungen. Die wichtigsten Merkmale sind hierbei die Vermeidung der Sedimentation des Füllstoffes und die geringe Viskosität der Polyolformulierungen. Alle hergestellten, erfindungsgemäßen, füllstoffhaltigen Polyolformulierungen sind in einer Polyurethansprühanlage verarbeitbar.

### Herstellung der Polyurethane

Es wurden Chargen von ca. 50 kg Polyolformulierung mittels eines Dissolverrührers hergestellt. Beim Einrühren des Füllstoffes in die Polyolformulierung wurde zuerst der grobe Füllstoff und dann der feine Füllstoff eingearbeitet. Eine zusätzliche Temperierung der füllstoffhaltigen Polyolformulierung erfolgte nicht. Nach Einarbeitung der gewünschten Füllstoffmenge wurde die füllstoffhaltige Polyolformulierung noch für mindestens 20 Minuten homogenisiert und danach evakuiert.

Für die Herstellung des Polyurethans wurde der füllstoffhaltigen Polyolformulierung die Isocyanatkomponente zugegeben. Die Kennzahl betrug 110. Die Kennzahl ist definiert als molares Verhältnis der reaktiven Gruppen der Isocyanatkomponente (Mole NCO) zu den reaktiven Gruppen der Polyolformulierung (Mole OH); das Verhältnis wird dann mit 100 multipliziert.

Für die Verarbeitung der füllstoffhaltigen Polyolformulierung und der Isocyanatkomponente wurde eine Polyurethanreaktionsmaschine der Firma Unipre verwendet. Die Rohstoffe (füllstoffhaltige Polyolformulierung und Isocyanatkomponente) wurden in der Anlage auf 75°C temperiert und mit einem konstanten Volumenstrom von ca. 1,8 l/min gefördert. Durch schichtweises Auftragen wurden Platten mit einer Dicke von ca. 4 mm bei einer Breite und Länge von jeweils ca. 400 mm hergestellt. Aus diesen Platten wurden dann für die Untersuchung der mechanischen Eigenschaften normgerechte Probekörper herausgesägt. Die Messungen wurden gemäß DIN EN ISO 178 durchgeführt.

**Tabelle 5: Ergebnisse der Messungen der mechanischen Werte an den hergestellten Polyurethanplatten mit unterschiedlichen Füllstoffkombinationen bei 70 Gew.-% Füllstoffanteil in der Polyolformulierung und mit einem Feinanteil von 15 % zu einem Grobanteil von 85 %**

| Feinanteil: | Grobanteil | E-Modul [MPa] | Maximale Kraft [MPa] | Bruchdehnung [%] |
|---|---|---|---|---|
| Calatem C16T | Mikhart 65 | 6330 ± 140 | 55,0 ± 0,7 | 1,58 ± 0,04 |
| Calatem C16T | Mikhart 40 | 6417 ± 94 | 56,8 ± 0,7 | 1,55 ± 0,09 |
| Calatem C16T | Martinal ON320 | 6413 ± 87 | 59,7 ± 1,0 | 1,13 ± 0,03 |

Die gemessenen mechanischen Eigenschaften belegen, dass generell ein E-Modul von ca. 6000 MPa und mehr erreicht wird. Die maximale Kraft liegt bei ca. 55 MPa. Die Bruchdehnung liegt bei 1,1 bis 1,6 %.

## Patentansprüche

1. Füllstoffhaltige Polyolformulierung bestehend aus
i) einer Polyolkomponente mit einer zahlenmittleren OH-Zahl von 250 bis 600 mg KOH/g und einer zahlenmittleren Funktionalität von 2,5 bis 5, die mindestens ein oder mehrere Polyole enthält
ii) gegebenenfalls Kettenverlängerern und/oder Vernetzungsmitteln
iii) gegebenenfalls Katalysatoren und/oder Aktivatoren
iv) gegebenenfalls Hilfs- und/oder Zusatzmitteln
v) gegebenenfalls Treibmitteln
vi) mindestens einem Füllstoff aus der Gruppe bestehend aus Calciumcarbonat, Kaolinit, Aluminiumhydroxid und Talkum in einer Menge von 50 bis 75 Gew.-%, bezogen auf die Polyolformulierung,
wobei ein Grobanteil an Füllstoffteilchen mit d₅₀ von 30 bis 80 µm in einer Menge von 80 bis 97,5 Gew.-%, bezogen auf den Füllstoff, und ein Feinanteil an Füllstoffteilchen mit d₅₀ von 0,5 bis 2 µm in einer Menge von 2,5 bis 20 Gew.-%, bezogen auf den Füllstoff, in dem mindestens einen Füllstoff vorliegt und der Füllstoff bis zu 40 Tagen bei 20°C nicht sedimentiert und wobei die Viskosität der Polyolformulierung bei 70°C unter 5000 mPas (gemäß DIN EN ISO 2555) liegt.

2. Füllstoffhaltiges Polyurethan enthaltend das Reaktionsprodukt aus
a) einer füllstoffhaltigen Polyolformulierung gemäß Anspruch 1 wobei ein Grobanteil an Füllstoffteilchen mit d₅₀ von 30 bis 80 µm in einer Menge von 80 bis 97,5 Gew.-%, bezogen auf den Füllstoff, und ein Feinanteil an Füllstoffteilchen mit d₅₀ von 0,5 bis 2 µm in einer Menge von 2,5 bis 20 Gew.-%, bezogen auf den Füllstoff, in dem mindestens einen Füllstoff vorliegt und der Füllstoff bis zu 40 Tagen bei 20°C nicht sedimentiert und wobei die Viskosität der Polyolformulierung bei 70°C unter 5000 mPas (gemäß DIN EN ISO 2555) liegt, und
b) mindestens einer Di- und/oder Polyisocyanatkomponente.

3. Bauteil bestehend aus mindestens einem Polyurethan gemäß Anspruch 2 und gegebenenfalls einem Substrat oder gegebenenfalls einer oder mehreren Schichten.

4. Bauteil bestehend aus mindestens einem Polyurethan gemäß Anspruch 2 und einem Substrat oder mindestens einer oder mehreren Schichten.

5. Verbundbauteil bestehend aus mindestens einer Schicht aus einem Polyurethan gemäß Anspruch 2 und mindestens einer oder mehreren Schichten.

6. Verfahren zur Herstellung von Verbundbauteilen, die mindestens eine füllstoffhaltige Polyurethanschicht aus einer füllstoffhaltigen Polyolformulierung und mindestens einer Di- und/oder Polyisocyanatkomponente und die mindestens ein Substrat oder mindestens eine Schicht aufweisen, durch Sprühtechnik, **dadurch gekennzeichnet, dass**
a) mindestens ein Füllstoff aus der Gruppe bestehend aus Calciumcarbonat, Kaolinit, Aluminiumhydroxid und Talkum in einer Menge von 50 bis 75 Gew.-%, bezogen auf die füllstoffhaltige Polyolformulierung, mit einer Polyolformulierung bestehend aus den Komponenten i) bis v) gemäß Anspruch 1
zu einer Polyolformulierung mit einer Viskosität bei 70°C von unter 5000 mPas (gemäß DIN EN ISO 2555 bei 70°C) abgemischt wird,
wobei ein Grobanteil an Füllstoffteilchen mit d₅₀ von 30 bis 80 µm in einer Menge von 80 bis 97,5 Gew.-%, bezogen auf den Füllstoff, und ein Feinanteil an Füllstoffteilchen mit d₅₀ von 0,5 bis 2 µm in einer Menge von 2,5 bis 20 Gew.-%, bezogen auf den Füllstoff, in dem mindestens einen Füllstoff vorliegt und der Füllstoff bis zu 40 Tagen bei 20°C nicht sedimentiert,
b) die füllstoffhaltige Polyolformulierung aus a) in einem Sprühkopf mit mindestens einer Di- und/oder Polyisocyanatkomponente zu einer Mischung vermischt wird,
c) die Mischung aus b) auf ein Substrat oder eine Schicht aufgesprüht wird und aushärtet.

## Claims

1. Filler-containing polyol formulation consisting of
i) a polyol component having a number-average OH number of 250 to 600 mg KOH/g and a number-average functionality of 2.5 to 5, containing at least one or more than one polyol,
ii) optionally chain extenders and/or crosslinkers,
iii) optionally catalysts and/or activators,
iv) optionally assistants and/or additives,
v) optionally blowing agents,
vi) at least one filler from the group consisting of calcium carbonate, kaolinite, aluminum hydroxide and talc in an amount of 50% to 75% by weight, based on the polyol formulation,
wherein a coarse fraction of filler particles having d₅₀ of 30 to 80 µm in an amount of 80% to 97.5% by weight, based on the filler, and a fine fraction of filler particles having d₅₀ of 0.5 to 2 µm in an amount of 2.5% to 20% by weight, based on the filler, are present in the at least one filler and the filler does not sediment for up to 40 days at 20°C, and wherein the viscosity of the polyol formulation at 70°C is below 5000 mPas (to DIN EN ISO 2555).

2. Filler-containing polyurethane comprising the reaction product of
a) a filler-containing polyol formulation according to Claim 1
wherein a coarse fraction of filler particles having d₅₀ of 30 to 80 µm in an amount of 80% to 97.5% by weight, based on the filler, and a fine fraction of filler particles having d₅₀ of 0.5 to 2 µm in an amount of 2.5% to 20% by weight, based on the filler, are present in the at least one filler and the filler does not sediment for up to 40 days at 20°C, and wherein the viscosity of the polyol formulation at 70°C is below 5000 mPas (to DIN EN ISO 2555), and
b) at least one di- and/or polyisocyanate component.

3. Component consisting of at least one polyurethane according to Claim 2 and optionally a substrate or optionally one or more layers.

4. Component consisting of at least one polyurethane according to Claim 2 and a substrate or at least one or more than one layer.

5. Composite component consisting of at least one layer of a polyurethane according to Claim 2 and at least one or more than one layer.

6. Process for producing composite components having at least one filler-containing polyurethane layer formed from a filler-containing polyol formulation and at least one di- and/or polyisocyanate component and having at least one substrate or at least one layer, by spray methodology, **characterized in that**
a) at least one filler from the group consisting of calcium carbonate, kaolinite, aluminum hydroxide and talc in an amount of 50% to 75% by weight, based on the filler-containing polyol formulation, is blended with a polyol formulation consisting of the components i) to v) according to Claim 1
to give a polyol formulation having a viscosity at 70°C of less than 5000 mPas (to DIN EN ISO 2555 at 70°C),
wherein a coarse fraction of filler particles having d₅₀ of 30 to 80 µm in an amount of 80% to 97.5% by weight, based on the filler, and a fine fraction of filler particles having d₅₀ of 0.5 to 2 µm in an amount of 2.5% to 20% by weight, based on the filler, are present in the at least one filler and the filler does not sediment for up to 40 days at 20°C,
b) the filler-containing polyol formulation from a) is mixed in a spray head with at least one di- and/or polyisocyanate component to give a mixture,
c) the mixture from b) is sprayed onto a substrate or a layer and cured.

## Revendications

1. Formulation de polyol contenant une charge, constituée par :
i) un composant polyol ayant un indice OH moyen en nombre de 250 à 600 mg KOH/g et une fonctionnalité moyenne en nombre de 2,5 à 5, qui contient au moins un ou plusieurs polyols,
ii) éventuellement des allongeurs de chaines et/ou des agents de réticulation,
iii) éventuellement des catalyseurs et/ou des activateurs,
iv) éventuellement des adjuvants et/ou des additifs,
v) éventuellement des agents gonflants,
vi) au moins une charge du groupe constitué par le carbonate de calcium, la kaolinite, l'hydroxyde d'aluminium et le talc en une quantité de 50 à 75 % en poids, par rapport à la formulation de polyol,
une fraction grossière de particules de charge ayant un d₅₀ de 30 à 80 µm en une quantité de 80 à 97,5 % en poids, par rapport à la charge, et une fraction fine de particules de charge ayant un d₅₀ de 0,5 à 2 µm en une quantité de 2,5 à 20 % en poids, par rapport à la charge, étant présentes dans ladite au moins une charge, et la charge ne sédimentant pas pendant jusqu'à 40 jours à 20 °C et la viscosité de la formulation de polyol à 70 °C étant inférieure à 5 000 mPas (selon DIN EN ISO 2555).

2. Polyuréthane contenant une charge, contenant le produit de réaction de
a) une formulation de polyol contenant une charge selon la revendication 1,
une fraction grossière de particules de charge ayant un d₅₀ de 30 à 80 µm en une quantité de 80 à 97,5 % en poids, par rapport à la charge, et une fraction fine de particules de charge ayant un d₅₀ de 0,5 à 2 µm en une quantité de 2,5 à 20 % en poids, par rapport à la charge, étant présentes dans ladite au moins une charge, et la charge ne sédimentant pas pendant jusqu'à 40 jours à 20 °C et la viscosité de la formulation de polyol à 70 °C étant inférieure à 5 000 mPas (selon DIN EN ISO 2555), et
b) au moins un composant di- et/ou polyisocyanate.

3. Composant constitué d'au moins un polyuréthane selon la revendication 2 et éventuellement d'un substrat ou éventuellement d'une ou plusieurs couches.

4. Composant constitué d'au moins un polyuréthane selon la revendication 2 et d'un substrat ou d'au moins une ou plusieurs couches.

5. Composant composite constitué d'au moins une couche en un polyuréthane selon la revendication 2 et au moins une ou plusieurs couches.

6. Procédé de fabrication de composants composites, qui comprennent au moins une couche de polyuréthane contenant une charge en une formulation de polyol contenant une charge et au moins un composant di- et/ou polyisocyanate et ledit au moins un substrat ou au moins une couche, par une technique de pulvérisation, **caractérisé en ce que**
a) au moins une charge du groupe constitué par le carbonate de calcium, la kaolinite, l'hydroxyde d'aluminium et le talc en une quantité de 50 à 75 % en poids, par rapport à la formulation de polyol contenant une charge, est mélangée avec une formulation de polyol constituée des composants i) à v) selon la revendication 1,
pour former une formulation de polyol ayant une viscosité à 70 °C inférieure à 5 000 mPas (selon DIN EN ISO 2555 à 70 °C),
une fraction grossière de particules de charge ayant un d₅₀ de 30 à 80 µm en une quantité de 80 à 97,5 % en poids, par rapport à la charge, et une fraction fine de particules de charge ayant un d₅₀ de 0,5 à 2 µm en une quantité de 2,5 à 20 % en poids, par rapport à la charge, étant présentes dans ladite au moins une charge, et la charge ne sédimentant pas pendant jusqu'à 40 jours à 20 °C,
b) la formulation de polyol contenant une charge de a) est mélangée dans une tête de pulvérisation avec au moins un composant di- et/ou polyisocyanate pour former un mélange,
c) le mélange de b) est pulvérisé sur un substrat ou une couche et durci.
